(19) Europäisches Patentamt
European Patent Office
Office européen des brevets

(11) Publication number: 0 245 446
B1

(12) **EUROPEAN PATENT SPECIFICATION**

(45) Date of publication of patent specification: **16.08.90**

(51) Int. Cl.$^5$: **C 08 G 65/00,** C 08 G 2/00

(21) Application number: **86907097.9**

(22) Date of filing: **31.10.86**

(86) International application number: **PCT/US86/02351**

(87) International publication number: **WO 87/02993 21.05.87 Gazette 87/11**

# (54) PERFLUOROPOLYETHERS.

(30) Priority: **08.11.85 US 796622**

(43) Date of publication of application: **19.11.87 Bulletin 87/47**

(45) Publication of the grant of the patent: **16.08.90 Bulletin 90/33**

(84) Designated Contracting States: **BE DE FR GB IT NL**

(56) References cited:
**FR-A-1 585 601**
**US-A-4 523 039**

**Journal of Organic Chemistry, vol. 43, November 1978 ( Easten, US ) R.J. Lagow et al.: "Synthesis of the perfluoropoly(ethylene glycol) ethers by direct fluorination", pages 4505-4509**
**Journal of the Chemical Society, Perkin Transactions I, May 1981 ( Letchworth, GB ) R.J. Lagow et al.: "Synthesis of perfluoropolyethers by direct fluorination: a novel preparation for perfluoro ( polypropylene oxide ) ethers and perfluoro ( polymethylene oxide ) ethers", pages 1321-1328**

**The file contains technical information submitted after the application was filed and not included in this specification**

(73) Proprietor: **EXFLUOR RESEARCH CORPORATION**
**P.O. Box 7807**
**Austin, TX 78712 (US)**

(72) Inventor: **LAGOW, Richard, J.**
**6204 Shadow Mountain**
**Austin, TX 78712 (US)**
Inventor: **BIERSCHENK, Thomas, R.**
**1803 Chincoteague**
**Roundrock, TX 78681 (US)**
Inventor: **JUHLKE, Timothy, J.**
**2106 Windsong Trail**
**Roundrock, TX 78664 (US)**

(74) Representative: **Pendlebury, Anthony et al**
**PAGE, WHITE & FARRER 54 Doughty Street**
**London WC1N 2LS (GB)**

EP 0 245 446 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is in the fields of polymer and fluorine chemistry.

Perfluoropolyethers have long been recognized for their outstanding thermal properties and their wide liquid ranges. These properties render them useful as hydraulic fluids, heat exchange fluids and lubricants. For many applications, it is desirable to have a fluid with very good low temperature properties (e.g. low pour points) as well as good high temperature stability. It is recognized in the art that one way of extending the low temperature liquid range of a fluid is the incorporation of methylene oxide units in the polymer. The low energy of activation for rotation about a carbon-oxygen bond gives the fluid added mobility at low temperatures. Unfortunately, typical vinyl polymerization techniques such as those used to make polytetrafluoroethylene oxide and polyhexafluoropropylene oxide (DuPont Krytox™) cannot be used to make a difluoromethylene oxide containing polymer.

Sianesi and coworkers describe the synthesis of polymers of the general formulae $CF_3—O—(CF_2—O)_n—CF_2—C(O)F$, $CF_3—(O—CF_2)_n—CF_2—C(O)F$ and $CF_3—(O—CF_2)_n—O—C(O)F$. See French patents 1,531,902 and 1,545,639. The polymeric mixture was obtained by reacting difluorocarbene (generated *in situ* by the pyrolysis of hexafluoropropene) with molecular oxygen. Although the polymers contain reactive end groups such as acyl fluoride and fluoroformat groups which limit their stability, the polymers represented a major breakthrough.

Gerhardt and Lagow describe the synthesis of perfluoropolyethylene oxide by direct fluorination. *J. Chem. Soc., Perkin Trans. I*, 1321 (1981). The authors also report the formation of a partially fluorinated polymer obtained in low yield when polymethylene oxide (polyformaldehyde) was slowly reacted with dilute elemental fluorine at −78°C.

This invention pertains to perfluoropolyethers which contain high concentrations of difluoromethylene oxide units in the polymer chain and which are capped with unreactive trifluoromethyl terminal groups. The polymers contain a hydrogen content below 5 ppm and can be prepared in 20 to 90% yield depending on the composition of the polymer being fluorinated. The polymers are synthesized by perfluorinating, preferably in the presence of a hydrogen fluoride scavenger such as sodium fluoride, polymers which contain at least one ethylene oxide, propylene oxide, or butylene oxide for every 100 methylene oxide units along the polymer chain. The perfluoropolyethers of this invention are represented by the formula:

$$CF_3—(OCF_2)_n—(OY)_m—OCF_3$$

wherein Y can be $—CF_2CF_2CF_2—$, $—CF_2CF_2CF_2CF_2—$ or $—CF(C_2F_5)CF_2—$; and wherein n is an integer greater than 1 and m is an integer equal to or greater than 1 such that the ratio n/m is from about 100 to about 2. The repeat units ($OCF_2$) and (OY) are randomly distributed in the polymer chain. The polymers include copolymers containing difluoromethylene oxide units to perfluoropropylene oxide or perfluorobutylene oxide units in a ratio of from about 100 to about 2 to 1. The polymers range in molecular weight from about 300 atomic mass units (amu) to about 50,000 amu. The higher molecular weight polymers are solids; the lower molecular weight polymers are fluids.

The perfluoropolyether fluids of this invention are useful as hydraulic fluids, as heat transfer media or as bases for high performance greases which require fluids having a wide liquid range. The perfluoropolyether solids are useful as moldable elastomers or grease fillers. In addition, the solid polymers can be broken down, for example, by pyrolysis at 600°C, to produce low molecular weight fluids.

According to a further aspect of the present invention there is provided a method of preparing perfluoropolyethers having a chain structure consisting essentially of repeating units $—OCF_2—$ and $—OY—$, wherein Y is $—CF_2—$, $—CF_2CF_2—$, $—CF_2CF_2CF_2—$, $—CF(CF_3)CF_2—$, $—CF_2CF_2CF_2CF_2—$ or $—CF(C_2F_5)CF_2—$, the repeating units being randomly distributed along the chain, the ratio of the number of $—OCF_2—$ units to $—OY—$ units (where OY is a unit other than $—CF_2—$) being from about 100/1 to about 2/1, the perfluoropolyethers having a molecular weight from about 300 to about 50,000 atomic mass units, comprising the steps of:

a. providing a copolyether having a chain structure consisting essentially of methylene oxide units and at least one ethylene oxide, propylene oxide or butylene oxide unit for about every 100 methylene oxide units, the units being randomly distributed along the polymeric chain;

b. perfluorinating the copolyether by:

i) exposing the copolymer to a mixture of an inert gas and fluorine gas, the fluorine concentration being from about 1 to about 10%;

ii) gradually increasing the concentration of fluorine gas until the polymer is exposed to pure fluorine gas thereby perfluorinating the copolyether to produce a perfluoropolyether.

Preferably, the ratio of the number of $—OCF_2—$ units to $—OY—$ units ranges from 100/1 to 10/1.

In a further preferred aspect, the present invention provides a method of preparing a perfluoropolyether containing difluoromethylene oxide and tetrafluoroethylene oxide repeating units randomly distributed along the polymeric chain and having trifluoromethyl terminal groups, the molar ratio of tetrafluoroethylene oxide units ranging from about 1 to about 10 percent, comprising the steps of:

a. providing a copolyether comprising methylene oxide and ethylene oxide repeating units, the molar ratio of ethylene oxide units ranging from about 1 to about 10 percent;

b. perfluorinating the copolyether by:

i) exposing the copolymer to a mixture of an inert gas and fluorine gas, the fluorine concentration being from about 1 to about 10%;

ii) gradually increasing the concentration of fluorine gas until the copolyether is exposed to pure fluorine gas thereby perfluorinating the copolymer to produce a perfluoropolyether.

The preferred molar ratio of ethylene oxide units to methylene oxide units in said method is about 1 to 2 percent.

Best mode of carrying out the invention

The perfluoropolyethers of this invention comprise perfluorinated copolymers of methylene oxide and either propylene oxide or butylene oxide wherein the ratio of methylene oxide units to propylene oxide or butylene oxide ranges from about 100/1 to about 2/1. The perfluoropolyethers are defined by the formula:

$$CF_3—(OCF_2)_n—(OY)_m—OCF_3$$

wherein Y is $—CF_2CF_2CF_2—$, $CF_2CF_2CF_2CF_2—$ or $—CF(C_2F_5)CF_2—$ and wherein n is an integer greater than 1 and m is an integer equal to or greater than 1 such that the ratio of n/m ranges from about 100 to about 2. The polymers range from about 300 to about 50,000 amu in size, the high molecular weight polymer being solids and the intermediate and lower molecular weight polymer being fluids. The polymers contain no reactive perfluoroalkyl end groups.

The perfluorpolyethers are synthesized by selecting or synthesizing a starting hydrocarbon polyether which contains methylene oxide units and the desired amount of ethylene oxide, propylene oxide or butylene oxide units and subsequently perfluorinating the polymer under controlled conditions, preferably in the presence of a sodium fluoride scavenger such as sodium fluoride or potassium fluoride. The hydrocarbon starting material must have at least one ethylene oxide, propylene oxide or butylene oxide unit for about every one hundred methylene oxide units along the polymer chain.

The type of perfluoropolymer product, and its molecular weight, depend on the composition of starting hydrocarbon polyether and the fluorination conditions. The hydrocarbon starting material can be selected from commercially available polymers such as CELCON™ (Celanese Corp.) which contains about a 55/1 ratio of methylene oxide units to ethylene oxide units. Alternatively, the starting polymers can be synthesized. Ethylene oxide-methylene oxide copolymers can be prepared with the desired ratio of comonomers by polymerization of 1,3-dioxolane/trioxane mixtures using a trifluoromethane sulfonic acid catalyst. Polymers of methylene oxide and propylene oxide or butylene oxide can be prepared for fluorination. For example, polymerization of trioxane and 4-methyl-1,3-dioxolane gives a copolymer of methylene oxide and propylene oxide.

The conditions of fluorination are important to the ultimate product. High fluorine concentrations, fast flow rates and elevated temperatures each favor fragmentation, and thus lower molecular weight products can be obtained. Milder fluorination conditions designed to prevent fragmentation give stable high molecular weight perfluoropolyethers.

Although a variety of fluorinating agents such as $ClF_3$ and $BrF_3$ could be used to fluorinate the hydrocarbon polymer, elemental fluorine is the reagent of choice. Typically, low fluorine concentrations between one and ten percent are used initially. Upon approaching perfluorination, the polymer is exposed to pure fluorine first at room temperature then at 100°C. The best results are obtained when a hydrogen fluoride scavanger, such as sodium fluoride, is placed in the fluorination reactor along with the polymer. The fluorination of ethers in the presence of hydrogen scavangers is described in WO 87/02994 entitled "Perfluorination of Ethers in the Presence of Hydrogen Fluoride Scavengers", filed concurrently, the teachings of which are incorporated by reference herein.

When mild fluorination conditions are used to fluorinate a high molecular weight polymer (greater than 10,000 amu), a white solid is typically obtained. Several schemes can be employed to prepare intermediate molecular weight fluids, Perfluorination of a low molecular weight polymer using mild fluorination conditions works well. Treating a higher molecular weight polymer with slightly harsher fluorination conditions can lead to fluids when the conditions are chosen to give a controlled amount of chain cleavage. "Perfluorination" of a high molecular weight polymer using mild conditions can be used to replace a specified number of hydrogens with fluorine. A second step, the fragmentation step, is designed to promote chain cleavage. Elevated temperatures and high fluorine concentrations are used to give the perfluoropolyether fluid.

An alternate scheme, and possibly the method of choice for preparing a wide range of molecular weights involves the fluorination of high molecular weight polymer using mild fluorination conditions to give a high molecular weight solid containing both perfluoro alkyl and acyl fluoride end groups. Treatment of the polymer with pure fluorine at elevated temperatures (100°C) gives a polymer containing only perfluoro alkyl end groups. The high molecular weight solids can be broken down to lower molecular weight components by pyrolysis. The procedure is described in WO 87/02995 entitled "The Pyrolysis of Perfluoropolyethers", filed concurrently herewith, the teachings of which are incorporated by reference. Thereafter, pyrolysis of the solid in the presence of nitrogen, air or fluorine gives lower molecular weight polymers (fluids). By selecting the proper pyrolysis temperature (400—500°C) and by carrying out the

pyrolysis in a distillation-type apparatus, a well defined boiling point range can be collected while less volatile components are returned to the high temperature portion of the apparatus to be further fragmented. If the pyrolysis is not carried out in the presence of fluorine, an additional fluorination at elevated temperature is needed to remove the acyl fluoride terminal groups generated during the cracking.

For preparation of difluoromethylene oxide, inclusion of the 2—4 carbon comonomer in the starting hydrocarbon polymer is believed to prevent depolymerization of the polymer during the fluorination procedure. For example, when pure, high molecular weight polymethylene oxide is fluorinated, no perfluorpolymethylene oxide is obtained. Carbonyl fluoride is made instead. The reasons for this is that when a high molecular weight polymer (greater than 10,000 amu) is fluorinated, the likelihood of breaking at least one carbon-oxygen bond along the polymer chain in the course of fluorination is essentially 100%. When bond cleavage occurs, the polymer is believed to depolymerize or "unzip" giving rise to carbonyl fluoride as the sole product.

By randomly incorporating at least one ethylene oxide for every 100 methylene oxide units, perfluoromethylene oxide yields in the 20 to 30% range can be obtained. The ethylene oxide unit is thought to provide a point of termination for the "unzipping" reaction. The ethylene oxide also provides a stable trifluoromethyl terminal group for the polymer. By doubling the molar concentration of ethylene oxide from 2% to 4%, the yield of perfluoropolymer is increased from 40% to 60%. Slightly higher concentrations give increasingly higher yields of perfluoromethylene oxide.

A preferred method of elemental fluorination for production of perfluoropolymethylene oxide is as follows. The starting hydrocarbon polyether is ground to a fine powder and mixed with powdered sodium fluoride (approximately 5/1 (w/w) ratio of NaF to polymer). The blend is dried under a stream of inert gas (e.g. nitrogen). The blend is then exposed to a stream of fluorine gas diluted with an inert gas (nitrogen or helium). This initial fluorine concentration should be about 1% with a fluorine flow rate of about 1 cc/min/gram polymer. The temperature is held at 0°C. These conditions are maintained for about 2 days after which the inert gas concentration is reduced by 50% to give a 2% fluorine content. After about 6 hours, fluorine concentration is raised to 10%. Over a period of 48—56 hours, fluorine concentration can be raised stepwise until the pure fluorine conditions are attained. The pure fluorine stream is maintained for about 4 hours to give a perfluorinated product. The product is then cooled. The product can be removed from NaF by dissolution in Freon 113.

The perfluoropolyether fluids of this invention have several distinct advantages over the existing fluids, namely Fomblin Z™ fluids. Polymers can be prepared which contain essentially 100% methylene oxide units instead of 50—60% methylene units which is typical of the Italian product. These polymers exhibit far superior low temperature properties and have viscosities which are extremely independent of temperature. Low pour points are needed for many cryogenic and space applications.

The invention is further illustrated by the following examples.

Example 1.

Production of perfluoropolymethylene oxide

200 grams of high molecular weight (10,000) polymethylene oxide which contains four mole percent ethylene oxide was prepared by copolymerizing 1,3,5-trioxane (2.8 mole) and 1,3-dioxolane (0.3 mole) using a trifluoromethane sulfonic acid catalyst ($2.6\times10^{-3}$ mole). The finely divided powder obtained was dried at room temperature for 12 hours using a stream of nitrogen gas. The powder was mixed with 1,000 grams of NaF powder in a conical shaped nickel reactor which was rotated at a frequency of 5 revolutions per minute. After purging the reactor with 4 L/min. nitrogen for several hours, the fluorine was set at 200 cc/min while the nitrogen flow was set at 5 L/min. After 48 hours, the nitrogen flow was reduced to 2.5 L/min. and was kept there for an additional 6 hours before exposing the polymer to pure fluorine. Following exposure of the polymer to pure fluorine for several hours at ambient temperature, the polymer was reacted with fluorine at 100°C to decarboxylate any acyl fluoride end groups to give trifluoromethyl terminated groups. Typically, a flow of 50 cc/min. of pure fluorine for 6 hours is sufficient to remove all of the unwanted end groups. The perfluoro product was separated from the NaF/$NaHF_2$ powder by dissolving the NaF in water. Approximately 210 grams of a white solid was obtained.

Approximately 75 g of a medium viscosity oil was extracted from the solid with freon 113 solvent. The fluid was characterized by $^{19}F$ NMR. Each of the individual spectral lines were assigned a structure by comparison with the spectra of known perfluoro compounds. Spectral data for the fluid is given in the table below.

TABLE 1

| Structure | Chemical shift (ppm) | Relative intensity |
|---|---|---|
| $—OCF_2CF_2OCF_2OCF_2CF_2O—$ | — | — |
| $—OCF_2OCF_2OCF_2CF_2O—$ | 55.1 | 7.3 |
| $—OCF_2OCF_2OCF_2O—$ | 57.0 | 73.0 |
| $CF_3OCF_2O—$ | 57.4 | 7.3 |
| $CF_3OCF_2O—$ | 59.7 | 11.8 |
| $—OCF_2CF_2OCF_2CF_2O—$ | 90.7 | 1.4 |
| $—OCF_2OCF_2CF_2O—$ | 92.5 | 2.8 |

On the basis of the NMR Spectroscopic analysis, the fluid was determined to be polydifluoromethylene oxide containing approximately 2 mole percent tetrafluoroethylene oxide.

Example 2

200 g of high molecular weight (10,000) poly(ethylene oxide-methylene oxide) copolymer which contained fourteen mole percent ethylene oxide was prepared in a manner similar to that used for preparing the polymer of Example 1. 1,3-dioxolane (0.6 mole) is mixed with trioxane (1.75 moles) in a methylene chloride solvent. A white precipitate forms upon adding the trifluoromethane sulfonic acid catalyst ($2.6\times10^{-3}$ mole). The finely divided powder obtained was dried at room temperature for twelve hours using a stream of nitrogen. The powder was mixed with 100 g of NaF powder in a conical shaped nickel reactor which was rotated at a frequency of five revolutions per minute. The polymer was fluorinated using conditions identical to those employed for the fluorination of the polymethylene oxide polymer containing four mole percent ethylene oxide (Example 1). Approximately 260 grams of white elastomeric solid was obtained upon dissolving the sodium fluoride/bifluoride in water.

Extraction of the solid with freon 113 gave 95 g of a freon soluble oil which was characterized by $^{19}F$ NMR as above.

TABLE 2

| Structure | Chemical shift (ppm) | Relative intensity |
|---|---|---|
| $—OCF_2CF_2OCF_2OCF_2CF_2O—$ | 53.8 | 2.9 |
| $—OCF_2OCF_2OCF_2CF_2O—$ | 55.3 | 8.3 |
| $—OCF_2OCF_2OCF_2O—$ | 56.8 | 54.1 |
| $CF_3OCF_2O—$ | 57.5 | 9.5 |
| $CF_3OCF_2O—$ | 59.8 | 12.4 |
| $—OCF_2CF_2OCF_2CF_2O—$ | 91.0 | 1.2 |
| $—OCF_2OCF_2CF_2O—$ | 92.7 | 8.3 |

Based upon the NMR Spectrum, the fluid was determined to be a copolymer of difluoromethylene oxide (DFMO) and tetrafluoroethylene (TFEO) oxide in which the molar ratio DFMO to TFEO units was essentially the same as the molar ratio of the methylene to ethylene units in the starting polymer (94/6).

Example 3

20 g of a high molecular weight (20,000) poly(ethylene oxide-methylene oxide) copolymer containing 0.5 mole percent ethylene oxide was mixed with 140 g of NaF powder and loaded in a small fluorination reactor. The reactor was cooled to −20°C and a gas flow of 20 cc/min fluorine and 100 cc/min nitrogen was maintained for 24 hours. Next, the temperature was raised to 0°C while the gas flows were held at their initial settings for an additional 24 hours. The nitrogen flow was then decreased to 50 cc/min with a reactor temperature of +10°C for 12 hours. Finally, the polymer was treated at room temperature for six hours with pure fluorine. The perfluoro product was separated from the $NaF/NaHF_2$ powder by dissolving the salt in water. Approximately 11 g of a fine white powder was obtained.

Example 4

200 g of a high molecular weight polymethylene oxide which contained six mole percent propylene oxide was prepared by copolymerizing 1,3,5-trioxane and 4-methyl-1,3-dioxolane using a trifluoromethane sulfonic acid catalyst. The finely divided powder obtained was dried at room temperature for 12 hours using a stream of nitrogen gas. The powder was mixed with 1,200 g of NaF powder in a conical shaped nickel reactor which was rotated at a frequency of 5 revolutions per minute. After purging the reactor with several volumes of nitrogen, the fluorine flow was set at 200 cc/min while the nitrogen flow was set at 5 L/min. These conditions were maintained for 48 hours (reactor temperature: 0°C), at which time the nitrogen flow was reduced to 2.5 liters per minute and was kept there for an additional 6 hours before exposing the polymer to pure fluorine. Following exposure of the polymer to pure fluorine for 6 hours at ambient temperature, the polymer was treated with pure fluorine at 110°C for 4 hours. The reactor products were washed with several gallons of water leaving behind 240 g of a white powder identified by $^{19}F$ nmr as a perfluoro(methylene oxide-propylene oxide) copolymer.

Industrial applicability

The perfluoropolyether fluids of this invention are useful as hydraulic fluids, heat transfer media or as bases for high performance greases which require fluids having a wide liquid range. The solid perfluoropolyethers can be used as elastomers and as fillers for high performance greases.

**Claims**

1. Perfluoropolyethers of the formula:

$$CF_3—(OCF_2)_n—(OY)_m—OCF_3$$

wherein:

Y is $—CF_2CF_2CF_2—$, $—CF_2CF_2CF_2CF_2—$ or $—CF(C_2F_5)CF_2—$;

n is an integer greater than 1;

m is an integer equal to or greater than 1 such that the ratio n/m is from about 100/1 to about 2/1; the units $(OCF_2)$ and (OY) being randomly distributed along the polymer chain, and

the perfluoropolyethers having a molecular weight from about 300 to about 50,000 atomic mass units.

2. Perfluoropolyethers according to claim 1, wherein the ratio n/m is from about 100/1 to about 10/1.

3. A perfluoropolyether having a chain structure consisting essentially of repeating units $—OCF_2$ and —OY—, wherein Y is $—CF_2CF_2CF_2—$, $—CF_2CF_2CF_2CF_2—$ or $—CF(C_2F_5)CF_2—$, and having trifluoromethyl terminal groups, the repeating units being randomly distributed along the chain, the ratio of the number of $—OCF_2—$ units to —OY— units being from about 100/1 to about 2/1, the perfluoropolyether having a molecular weight from about 300 to about 50,000 atomic mass units.

4. A perfluoropolyether according to claim 3, wherein the ratio of the number of $—OCF_2—$ units to —OY— units ranges from about 100/1 to about 10/1.

5. A method of preparing perfluoropolyethers having a chain structure consisting essentially of repeating units $—OCF_2—$ and —OY—, wherein Y is $—CF_2—$, $—CF_2CF_2—$, $—CF_2CF_2CF_2—$, $—CF(CF_3)CF_2—$, $—CF_2CF_2CF_2CF_2—$ or $—CF(C_2F_5)CF_2—$, the repeating units being randomly distributed along the chain, the ratio of the number of $—OCF_2—$ units to —OY— units (where OY is a unit other than $—CF_2—$) being from about 100/1 to about 2/1, the perfluoropolyethers having a molecular weight from about 300 to about 50,000 atomic mass units, comprising the steps of:

a. providing a copolyether having a chain structure consisting essentially of methylene oxide units and at least one ethylene oxide, propylene oxide or butylene oxide unit for about every 100 methylene oxide units, the units being randomly distributed along the polymeric chain;

b. perfluorinating the copolyether by exposing the polymer to elemental fluorine to produce a perfluoropolyether.

6. A method according to claim 5, wherein step (b) is performed by:—

i) exposing the copolymer to a mixture of an inert gas and fluorine gas, the fluorine concentration being from about 1 to about 10%;

ii) gradually increasing the concentration of fluorine gas until the polymer is exposed to pure fluorine gas thereby perfluorinating the copolyether to produce a perfluoropolyether.

7. A method according to claim 5 or 6, wherein the ratio of the number of $—OCF_2—$ units to OY units ranges from 100/1 to 10/1.

8. A method according to claim 5, 6 or 7, wherein the perfluoropolyether is perfluorinated in the presence of NaF.

9. A method of preparing a perfluoropolyether containing difluoromethylene oxide and tetrafluoroethylene oxide repeating units randomly distributed along the polymeric chain and having trifluoromethyl terminal groups, the molar ratio of tetrafluoroethylene oxide units ranging from about 1 to about 10 percent, comprising the steps of:

a. providing a copolyether comprising methylene oxide and ethylene oxide repeating units, the molar ratio of ethylene oxide units ranging from about 1 to about 10 percent;

b. perfluorinating the copolyether by:

i) exposing the copolymer to a mixture of an inert gas and fluorine gas, the fluorine concentration being from about 1 to about 10%;

ii) gradually increasing the concentration of fluorine gas until the copolyether is exposed to pure fluorine gas thereby perfluorinating the copolyether to produce a perfluoropolyether.

10. A method according to claim 9, wherein the molar ratio of ethylene oxide units to methylene oxide units is about 1 to 2 percent.

**Patentansprüche**

1. Perfluorpolyether der Formel:

$$CF_3—(OCF_2)_n—(OY)_m—OCF_3$$

worin:

Y für $—CF_2CF_2CF_2—$, $—CF_2CF_2CF_2CF_2—$ oder $—CF(C_2F_5)CF_2—$;

n für eine ganze Zahl größer als 1;

m für eine ganze Zahl größer oder gleich 1 steht, wobei das Verhältnis n/m im Bereich von ungefähr 100/1 bis ungefähr 2/1 liegt; die Einheiten ($OCF_2$) und (OY) statistisch über die Polymerkette verteilt sind, und die Perfluorpolyether ein Molekulargewicht von ungefähr 300 bis ungefähr 50.000 Atommasseneinheiten haben.

2. Perfluorpolyether gemäß Anspruch 1, wobei das Verhältnis n/m im Bereich von ungefähr 100/1 bis ungefähr 10/1 liegt.

3. Perfluorpolyether mit einer Kettenstruktur, die im wesentlichen aus sich wiederholenden Einheiten $—OCF_2—$ und —OY— besteht, worin Y für $—CF_2CF_2CF_2—$, $—CF_2CF_2CF_2CF_2—$ oder $—CF(C_2F_5)CF_2—$ steht, und mit Trifluormethyl-Endgruppen versehen ist, wobei die sich wiederholenden Einheiten statistisch über die Kette verteilt sind; worin das Verhältnis der Anzahl von $—OCF_2$-Einheiten zu —OY-Einheiten im Bereich von ungefähr 100/1 bis ungefähr 2/1 liegt; und worin der Perfluorpolyether ein Molekulargewicht von ungefähr 300 bis ungefähr 50.000 Atommasseneinheiten aufweist.

4. Perfluorpolyether gemäß Anspruch 3, worin das Verhältnis der Anzahl von $—OCF_2$-Einheiten zu —OY-Einheiten im Bereich von ungefähr 100/1 bis ungefähr 10/1 liegt.

5. Verfahren zur Herstellung von Perfluorpolyethern mit einer Kettenstruktur, die hauptsächlich aus sich wiederholenden Einheiten $—OCF_2—$ und —OY— besteht, worin Y für $—CF_2—$, $—CF_2CF_2—$, $—CF_2CF_2CF_2—$, $—CF(CF_3)CF_2—$, $—CF_2CF_2CF_2CF_2—$ oder $—CF(C_2F_5)CF_2—$ steht, worin die sich wiederholenden Einheiten statistisch über die Kette verteilt sind, worin das Verhältnis der Anzahl von $—OCF_2$-Einheiten zu —OY-Einheiten (wobei OY eine andere Einheit ist als $—CF_2—$) im Bereich von ungefähr 100/1 bis ungefähr 2/1 liegt, wobei die Perfluorpolyether ein Molekulargewicht von ungefähr 300 bis ungefähr 50.000 Atommasseneinheiten haben, wobei das Verfahren folgende Schritte beinhaltet:

a) Synthese eines Copolyethers mit einer Kettenstruktur, die hauptsächlich aus Methylenoxid-Einheiten und wenigstens einer Ethylenoxid-, Propylenoxid- oder Butylenoxid-Einheit pro ungefähr jeder 100. Methylenoxid-Einheit besteht, wobei die Einheiten statistisch über die Polymerkette verteilt sind;

b) Perfluorierung des Copolyethers durch Einwirkung von elementarem Fluor auf das Polymer, um einen Perfluorpolyether zu erhalten.

6. Verfahren gemäß Anspruch 5, wobei die Stufe (b) wie folgt ausgeführt wird:

i) Einwirkung einer Mischung aus Inertgas und Fluorgas auf das Copolymer, wobei die Fluor-Konzentration im Bereich von ungefähr 1% bis ungefähr 10% liegt;

ii) schrittweise Erhöhung der Fluorgas-Konzentration, bis das Polymer reinem Fluorgas ausgesetzt ist, wobei das Copolymer perfluoriert wird, um einen Perfluorpolyether zu erhalten.

7. Verfahren gemäß Anspruch 5 oder 6, wobei das Verhältnis der Anzahl von $—OCF_2$-Einheiten zu —OY-Einheiten im Bereich von 100/1 bis 10/1 liegt.

8. Verfahren gemäß Anspruch 5, 6 oder 7, wobei der Perfluorpolyether in Gegenwart von NaF perfluoriert wird.

9. Verfahren zur Herstellung eines Perfluorpolyethers, der Difluormethylenoxid und Tetrafluorethylenoxid in sich wiederholenden Einheiten enthält, die statistisch über die Polymerkette verteilt sind, und der Trifluormethyl-Endgruppen besitzt, wobei das Molverhältnis der

Tetrafluorethylenoxid-Einheiten im Bereich von ungefähr 1 bis ungefähr 10 Prozent liegt, mit folgenden Verfahrensstufen:

a) Synthese eines Copolyethers, der sich wiederholende Methylenoxid- und Ethylenoxid-Einheiten enthält, wobei das Molverhältnis der Ethylenoxid-Einheiten im Bereich von ungefähr 1 bis ungefähr 10 Prozent liegt;

b) Perfluorierung des Copolyethers durch:

i) Einwirkung einer Mischung aus Inertgas und Fluorgas auf das Copolymer, wobei die Fluorkonzentration im Bereich von ca. 1 bis ca. 10% liegt;

ii) schrittweise Erhöhung der Fluorgas-Konzentration, bis der Copolyether reinem Fluorgas ausgesetzt ist, wodurch der Copolyether perfluoriert wird, um einen Perfluorpolyether herzustellen.

10. Verfahren gemäß Anspruch 9, wobei das Molverhältnis der Ethylenoxid-Einheiten zu den Methylenoxid-Einheiten ungefähr 1 bis 2 Prozent beträgt.

**Revendications**

1. Perfluoropolyéthers de formule:

$$CF_3—(OCF_2)_n—(OY)_m—OCF_3$$

dans laquelle

Y est $—CF_2CF_2CF_2—$, $—CF_2CF_2CF_2CF_2—$ ou $—CF(C_2F_5)CF_2—$;

n est un entier supérieur à 1;

m est un entier supérieur ou égal à 1, tel que le rapport n/m soit compris entre environ 100/1 et environ 2/1; les motifs ($OCF_2$) et (OY) étant répartis au hasard le long de la chaîne polymère, et

les perfluoropolyéthers ayant une masse moléculaire d'environ 300 à environ 50 000 unités de masse atomique.

2. Perfluoropolyéthers selon la revendication 1, dans lesquels le rapport n/m est compris entre environ 100/1 et environ 10/1.

3. Perfluoropolyéther, dont la chaîne a une structure constituée essentiellement de motifs répétitifs $—OCF_2—$ et —OY—, où Y est $—CF_2CF_2CF_2—$, $—CF_2CF_2CF_2CF_2—$ ou $—CF(C_2F_5)CF_2—$, et comportant des groupes trifluorométhyle terminaux, les motifs répétitifs étant répartis au hasard le long de la chaîne, le rapport du nombre des motifs $—OCF_2—$ à celui des motifs —OY— étant compris entre environ 100/1 et environ 2/1, le perfluoropolyéther ayant une masse moléculaire d'environ 300 à environ 50 000 unités de masse atomique.

4. Perfluoropolyéther selon la revendication 3, dans lequel le rapport du nombre de motifs $—OCF_2—$ à celui des motifs —OY— est compris entre environ 100/1 et environ 10/1.

5. Procédé de préparation de perfluoropolyéthers comportant une chaîne dont la structure est constituée essentiellement de motifs répétitifs $—OCF_2—$ et —OY—, où Y est $—CF_2—$, $—CF_2CF_2—$, $—CF_2CF_2CF_2—$, $—CF(CF_3)CF_2—$, $—CF_2CF_2CF_2CF_2—$ ou $—CF(C_2F_5)CF_2—$, les motifs répétitifs étant répartis au hasard le long de la chaîne, le rapport du nombre des motifs $—OCF_2—$ à celui des motifs —OY— (où OY est un motifs autre que $—CF_2—$) étant compris entre environ 100/1 et environ 2/1, le perfluoropolyéther ayant une masse moléculaire d'environ 300 à environ 50 000 unités de masse atomique, procédé comprenant les étapes consistant:

a. à préparer un copolyéther dont la chaîne a une structure constituée essentiellement de motifs oxyde de méthylène et d'au moins un motif oxyde d'éthylène, oxyde de propylène ou oxyde de butylène pour chaque tranche d'environ 100 motifs oxyde de méthylène, les motifs étant répartis au hasard le long de la chaîne polymère;

b. à perfluorer le copolyéther par exposition du polymère à du fluor élémentaire pour produire un perfluoropolyéther.

6. Procédé selon la revendication 5, dans lequel on met en oeuvre l'étape (b):

i) en exposant le copolymère à un mélange d'un gaz inerte et de fluor gazeux, la concentration du fluor étant d'environ 1 à environ 10%;

ii) en augmentant progressivement la concentration du fluor gazeux jusqu'à ce que le polymère soit exposé à du fluor gazeux pur, ce qui provoque la perfluoration du copolyéther et de ce fait produit un perfluoropolyéther.

7. Procédé selon les revendications 5 ou 6, dans lequel le rapport du nombre des motifs $—OCF_2—$ à celui des motifs OY est compris entre 100/1 et 10/1.

8. Procédé selon les revendications 5, 6 ou 7, dans lequel le perfluoropolyéther est perfluoré en présence de NaF.

9. Procédé de préparation d'un perfluoropolyéther contenant des motifs répétitifs oxyde de difluorométhylène et oxyde de tétrafluoréthylène répartis au hasard le long de la chaîne polymère et comportant des groupes trifluorométhyle terminaux, le rapport en moles de motifs oxyde de tétrafluoréthylène étant compris entre environ 1 et environ 10%, procédé comprenant les étapes consistant:

a. à préparer un copolyéther comprenant des motifs répétitifs oxyde de méthylène et oxyde d'éthylène,

le rapport en moles des motifs oxyde d'éthylène étant compris entre environ 1 et environ 10%;

b. à perfluorer le copolymère:

i) en exposant le copolymère à un mélange d'un gaz inerte et de fluor gazeux, la concentration du fluor étant d'environ 1 à environ 10%;

ii) en augmentant progressivement la concentration du fluor gazeux jusqu'à ce que le polymère soit exposé à du fluor gazeux pur, ce qui provoque la perfluoration du copolyéther et de ce fait produit un perfluoropolyéther.

10. Procédé selon la revendication 9, dans lequel le rapport en moles des motifs oxyde d'éthylène aux motifs oxyde de méthylène est compris entre environ 1 et 2%.